# EUROPÄISCHE PATENTSCHRIFT

(11) **EP 2 660 035 B1**
(45) Veröffentlichungstag und Bekanntmachung des Hinweises auf die Patenterteilung: **01.04.2015**
(21) Anmeldenummer: 12166130.0
(22) Anmeldetag: 30.04.2012
(51) Int. Cl.: B29C 47/92, B29C 47/08, B29B 7/30, B29B 9/06, B29C 47/30, B29C 47/66, B29C 47/40, B29C 47/00, B29C 47/60, B29C 47/38, B29C 47/86

(54) **Verfahren zum Anfahren einer Aufbereitungsanlage zur Herstellung von Kunststoffgranulat sowie Aufbereitungsanlage zur Herstellung von Kunststoffgranulat**
Method for starting a preparation assembly for producing plastic granulate and preparation assembly for producing plastic granulate
Procédé de démarrage d'une installation de préparation pour la fabrication de granulés de matière synthétique ainsi qu'installation de préparation destinée à la fabrication de ces granulés

(43) Veröffentlichungstag der Anmeldung: 06.11.2013
(73) Patentinhaber: Coperion GmbH, 70469 Stuttgart (DE)
(72) Erfinder: Ahlgrimm, Michael, 74354 Besigheim (DE); Sämann, Hans-Joachim, 74321 Bietigheim-Bissingen (DE); Kapfer, Klaus, 71229 Leonberg (DE); Munkes, Peter, 70439 Stuttgart (DE)
(74) Vertreter: Rau, Schneck & Hübner Patentanwälte Rechtsanwälte PartGmbB

(56) Entgegenhaltungen:
- DE-A1-102004 002 401
- US-A- 4 759 889
- FISCHER P: "Rechnersteuerung an Extrusionsanlagen", KUNSTSTOFFE,, Bd. 74, Nr. 7, 1. Juli 1984 (1984-07-01), Seiten 362-366, XP001354042,
- SCHWAB E: "Automatisierung von Kunststoffverarbeitungsmaschinen mit Mikrorechnersystemen", KUNSTSTOFFE,, Bd. 73, Nr. 11, 1. November 1983 (1983-11-01), Seiten 674-679, XP001353747,

## Beschreibung

Die Erfindung betrifft ein Verfahren zum Anfahren einer Aufbereitungsanlage zur Herstellung von Kunststoffgranulat gemäß dem Oberbegriff des Anspruchs 1. Ferner betrifft die Erfindung eine Aufbereitungsanlage zur Herstellung von Kunststoffgranulat gemäß dem Oberbegriff des Anspruchs 10.

Aus der DE 102 00 192 A1 ist eine Aufbereitungsanlage zur Aufbereitung von Kunststoffmaterial bekannt, bei der für das Anfahren ein Anfahrventil vorgesehen ist. Das aufzubereitende Kunststoffmaterial wird in einer Schneckenmaschine aufgeschmolzen und zu Beginn des Anfahrvorgangs zunächst mittels des Anfahrventils ausgeschleust. Das ausgeschleuste Kunststoffmaterial gelangt in ein mit Wasser gefülltes Abkühlbecken, wo es abkühlen und anschließend entsorgt werden kann. Am Ende des Anfahrvorgangs wird das Anfahrventil umgeschaltet, sodass das aufgeschmolzene Kunststoffmaterial nicht länger ausgeschleust wird, sondern in eine nachgeordnete Austragsvorrichtung gelangt. Bei einer derartigen Austragsvorrichtung handelt es sich üblicherweise um eine Granuliervorrichtung, die aus dem aufgeschmolzenen Kunststoffmaterial ein Kunststoffgranulat erzeugt. Das aus dem Stand der Technik bekannte Anfahren mittels eines Anfahrventils ist nachteilig, da das während des Anfahrvorgangs ausgeschleuste Kunststoffmaterial aufwändig entsorgt werden muss und zudem aufgrund der hohen Temperatur ein erhebliches Sicherheitsrisiko darstellt.

Aus der US 4 759 889 A ist das Anfahren einer Aufbereitungsanlage mit einer Schneckenmaschine und einer Granuliervorrichtung ohne Anfahrventil bekannt. Der Antriebsmotor der Schneckenmaschine stellt ein Ein-Signal bereit, das einen Timer startet. Nach einer vordefinierten Zeitdauer steuert der Timer über ein ODER-Glied ein Ventil an, das Wasser in die Granulierkammer einleitet. Zusätzlich ist ein Drucksensor vorgesehen, der den Schmelzedruck in dem Gehäuse der Schneckenmaschine misst. Übersteigt der Schmelzedruck einen Solldruck, so steuert ein Druckschalter das Ventil über das ODER-Glied an. Im Betrieb steuert der Timer das Ventil in der Regel vor dem Druckschalter an. Der Druckschalter stellt eine Sicherheitsmaßnahme dar, wenn der Timer das Ventil nicht rechtzeitig ansteuert.

Aus der DE 10 2004 002 401 A1 ist eine Anfahreinrichtung für eine Unterwassergranulierung bekannt.

Der Fachartikel "Rechnersteuerung an Extrusionsanlagen" von P. Fischer, Kunststoffe, Band 74, Nr. 7, 1984 offenbart eine Extrusionsanlage mit einer automatisch gesteuerten Granuliervorrichtung.

Der Fachartikel "Automatisierung von Kunststoffverarbeitungsmaschinen mit Mikrorechnersystemen" von E. Schwab, Kunststoffe, Band 73, Nr. 11, 1983 offenbart einen automatischen Anfahrvorgang für eine Granulieranlage.

Der Erfindung liegt die Aufgabe zugrunde, ein Verfahren zum Anfahren einer Aufbereitungsanlage zur Herstellung von Kunststoffgranulat zu schaffen, das einen einfachen und sicheren Anfahrvorgang ermöglicht.

Diese Aufgabe wird durch ein Verfahren mit den Merkmalen des Anspruchs 1 gelöst. Das Anfahren der Aufbereitungsanlage erfolgt auf direkte Weise ohne ein Anfahrventil. Das bedeutet, dass die Aufbereitungsanlage zwischen der Schneckenmaschine und der Granuliervorrichtung entweder überhaupt kein Anfahrventil aufweist oder ein vorhandenes Anfahrventil, beispielsweise bei bestehenden Aufbereitungsanlagen, zum Anfahren nicht benutzt wird. Vorzugsweise ist die Granuliervorrichtung ohne Zwischenschaltung eines Anfahrventils mit der Schneckenmaschine verbunden. Beim Anfahren der Aufbereitungsanlage muss sichergestellt sein, dass die Granuliervorrichtung ordnungsgemäß angefahren wird und es zu keinen Betriebsstörungen kommt. Es muss während der Inbetriebnahme der Granuliervorrichtung das aufgeschmolzene und heiße Kunststoffmaterial ungefähr zeitgleich mit dem kühlenden Granulierwasser in die Granuliervorrichtung eingeleitet werden. Wird das Kunststoffmaterial zu früh eingeleitet, so verklebt das Kunststoffmaterial die Schneideinrichtung der Granuliervorrichtung. Wird demgegenüber das Kunststoffmaterial zu spät eingeleitet, so erstarrt das Kunststoffmaterial in den Düsenöffnungen der Lochplatte der Granuliervorrichtung und verstopft diese. Um eine sichere Inbetriebnahme der Granuliervorrichtung zu gewährleisten, wird während des Anfahrvorgangs mindestens eine Förderposition des Kunststoffmaterials in der Schneckenmaschine ermittelt, indem mindestens ein zu der Aufbereitungsanlage ermitteltes Messsignal mittels der Steuervorrichtung ausgewertet wird. Dadurch, dass die mindestens eine Förderposition des Kunststoffmaterials in der Schneckenmaschine bekannt ist, kann die Granuliervorrichtung in zeitlicher Abhängigkeit zu der mindestens einen Förderposition angesteuert werden. Erreicht das Kunststoffmaterial eine bestimmte Förderposition in der Schneckenmaschine, so wird von der Steuervorrichtung ein Startvorgang bzw. Inbetriebnahmevorgang für die Granuliervorrichtung ausgelöst und die Granuliervorrichtung entsprechend angesteuert. Hierdurch wird gewährleistet, dass auch die Granuliervorrichtung ohne Betriebsstörungen angefahren werden kann. Durch das erfindungsgemäße Verfahren wird somit gewährleistet, dass der Anfahrvorgang einfach und sicher erfolgt, da ein Anfahrventil nicht erforderlich ist und das Kunststoffmaterial während des Anfahrvorgangs über die Granuliervorrichtung abgeführt wird, sodass während des Anfahrvorgangs außerhalb der Aufbereitungsanlage kein ausgeschleustes, heißes Kunststoffmaterial vorliegt.

Die Bestimmung des Startzeitpunkts T₀ gewährleistet eine zeitlich vordefinierte und sichere Inbetriebnahme der Granuliervorrichtung. Durch das mindestens eine Messsignal wird der Startzeitpunkt T₀ definiert, der den Beginn eines vordefinierten Inbetriebnahmevorgangs darstellt. Ausgehend von dem Startzeitpunkt T₀ können verschiedene Zeitabstände definiert werden, in denen einzelne Bauteile bzw. Einrichtungen der Granuliervorrichtung angesteuert werden. Die Ansteuerung des Ventils zur Zufuhr von Granulierwasser gewährleistet, dass das Granulierwasser im Wesentlichen zeitgleich mit dem aufgeschmolzenen Kunststoffmaterial in die Granuliervorrichtung bzw. an die Lochplatte der Granuliervorrichtung gelangt. Hierdurch wird eine sichere Inbetriebnahme der Granuliervorrichtung gewährleistet, da das Kunststoffmaterial weder die Düsenöffnungen der Lochplatte verstopft noch die Schneideinrichtung bzw. die Granuliermesser der Granuliervorrichtung verklebt.

Ein Verfahren nach Anspruch 2 gewährleistet, dass die Schneideinrichtung bzw. die Granuliermesser der Schneideinrichtung aufgrund der Reibung an der Lochplatte nicht überhitzen. Hierzu ist es insbesondere erforderlich, dass die Granuliermesser nicht zu früh gegen die Lochplatte gefahren werden und ungekühlt an der Lochplatte rotieren.

Ein Verfahren nach Anspruch 3 vereinfacht das Anfahren und Inbetriebnehmen der Granuliervorrichtung. Die Sprüheinrichtung ermöglicht einen frühzeitigen Kontakt der Granuliermesser mit der Lochplatte ohne die Gefahr einer Überhitzung, sodass bei einsetzendem Fluss des Kunststoffmaterials durch die Lochplatte sofort Kunststoffgranulate geschnitten werden. Die eingesprühte Wassermenge wird dabei so gewählt, dass die Granuliermesser durch die Reibung mit der Lochplatte nicht überhitzen, die Lochplatte jedoch nur unerheblich gekühlt wird, sodass ein Einfrieren bzw. Verstopfen der Düsenöffnungen verhindert wird. Durch den Sprühnebel werden die erzeugten Kunststoffgranulate abgekühlt und können im Einlaufbereich der Schneid- bzw. Granulierhaube gesammelt werden.

Ein Verfahren nach Anspruch 4 gewährleistet ein einfaches Inbetriebnehmen der Granuliervorrichtung. Die Sprüheinrichtung wird in vordefinierter Weise ausgehend von dem Startzeitpunkt T₀ angesteuert.

Ein Verfahren nach Anspruch 5 gewährleistet ein sicheres Inbetriebnehmen der Granuliervorrichtung. Dadurch, dass der Zeitabstand bzw. die Zeitabstände ΔT_{w}, ΔT_{G} und/oder ΔT_{S} in Abhängigkeit des aktuellen Betriebszustands der Aufbereitungsanlage bzw. der Schneckenmaschine ermittelt werden, ist gewährleistet, dass das Kunststoffmaterial ausgehend von der mindestens einen ermittelten Förderposition zu dem ermittelten Zeitpunkt tatsächlich an der Granuliervorrichtung bzw. der Lochplatte ankommt. Die Zeitdauer, die das Kunststoffmaterial von der ermittelten Förderposition bis zu der Granuliervorrichtung bzw. der Lochplatte benötigt, hängt insbesondere von der Wellendrehzahl der Schneckenmaschine und der Dosierrate der Dosiervorrichtung ab. Durch die Berücksichtigung mindestens einer dieser Zustandsgrößen kann der Anfahrvorgang optimiert werden.

Ein Verfahren nach Anspruch 6 ermöglicht in geeigneter Weise die Definition eines Startzeitpunkts T₀. Während des Anfahrvorgangs wird das von der Antriebsvorrichtung abgegebene Drehmoment ermittelt. Das Drehmoment kann entweder direkt gemessen werden, indem beispielsweise mittels mindestens einer Drehmoment-Messeinrichtung das abgegebene Drehmoment an mindestens einer der Antriebswellen gemessen wird. Alternativ kann das abgegebene Drehmoment berechnet werden, wenn die Aufbereitungsanlage keine Drehmoment-Messeinrichtung zur Messung des Drehmoments aufweist. Das Drehmoment kann beispielsweise aus der aufgenommenen Wirkleistung oder dem aufgenommenen Strom der Antriebsvorrichtung errechnet werden. Hierbei ist es ausreichend, wenn das abgegebene Drehmoment qualitativ ermittelt wird. Wenn nach dem Dosierstart aufzubereitendes Kunststoffmaterial in die Schneckenmaschine gelangt und dort aufgeschmolzen und geknetet wird, steigt das zum Antreiben der Schneckenmaschine erforderliche Drehmoment signifikant an. Dieser Anstieg des Drehmoments wird anhand eines Messsignals detektiert, das das von der Antriebsvorrichtung abgegebene Drehmoment charakterisiert. Dies kann beispielsweise ein Drehmoment-Messsignal, ein Wirkleistungs-Messsignal oder ein Strom-Messsignal sein. Überschreitet das Messsignal den vordefinierten Schwellwert W_{M}, so befindet sich die Schmelzefront des aufgeschmolzenen Kunststoffmaterials an einer im Wesentlichen bekannten Förderposition in der Schneckenmaschine. Ausgehend von dem Überschreiten des Schwellwertes W_{M} bzw. der zugehörigen Förderposition kann dann der Startzeitpunkt T₀ definiert werden, um den Inbetriebnahmevorgang der Granuliervorrichtung zu starten. Zum Definieren des Startzeitpunkts T₀ kann der Schwellwert W_{M} mit dem Messsignal selbst oder mit einem daraus abgeleiteten Signal, beispielsweise der zeitlichen Änderung des Messsignals verglichen werden.

Ein Verfahren nach Anspruch 7 ermöglicht auf einfache Weise das Bestimmen der Förderposition des aufgeschmolzenen Kunststoffmaterials in der Schneckenmaschine. Die Schneckenmaschine weist hierzu mindestens eine Druck-Messeinrichtung auf, die im Verfahrensteil den Druck an einer bestimmten Förderposition überwacht. Erreicht die Schmelzefront des aufgeschmolzenen Kunststoffmaterials die jeweilige Druck-Messeinrichtung, so steigt der Druck an, wodurch in dem zugehörigen Messsignal detektierbar ist, dass die Schmelzefront die zugehörige Förderposition erreicht hat. Vorzugsweise sind entlang der Förderrichtung mehrere Druck-Messeinrichtungen nacheinander angeordnet, um die Fortbewegung der Schmelzefront entlang der Förderrichtung zu überwachen.

Ein Verfahren nach Anspruch 8 ermöglicht auf einfache Weise das Definieren des Startzeitpunktes T₀ zum Starten des vordefinierten Inbetriebnahmevorgangs für die Granuliervorrichtung. Überschreitet das Messsignal den Schwellwert Wp, so bedeutet dies, dass die Schmelzefront die zugehörige Förderposition der Druck-Messeinrichtung erreicht hat. Ausgehend von dem Überschreiten des Schwellwertes Wp kann in einfacher und zuverlässiger Weise der Startzeitpunkt T₀ definiert werden. Zum Definieren des Startzeitpunkts T₀ kann der Schwellwert Wₚ mit dem Messsignal selbst oder mit einem daraus abgeleiteten Signal, beispielsweise der zeitlichen Änderung des Messsignals verglichen werden.

Ein Verfahren nach Anspruch 9 gewährleistet ein sicheres und zuverlässiges Anfahren. Weist die Aufbereitungsanlage eine Druck-Messeinrichtung auf, so kann diese dazu genutzt werden, den Anfahrvorgang der Aufbereitungsanlage bzw. den Inbetriebnahmevorgang der Granuliervorrichtung zu optimieren. Hierzu wird mittels eines Messsignals, das das abgegebene Drehmoment der Antriebsvorrichtung charakterisiert, oder mittels eines Messsignals, das den Druck an einer bestimmten Förderposition charakterisiert, in der beschriebenen Weise der Startzeitpunkt T₀ definiert. Eine weitere Druck-Messeinrichtung ist nahe der Lochplatte, vorzugsweise unmittelbar vor der Lochplatte angeordnet, sodass mittels des zugehörigen Messsignals der Zeitpunkt T₁ ermittelt werden kann, an dem die Schmelzefront an der Druck-Messeinrichtung bzw. an der Lochplatte tatsächlich ankommt. Weicht der Zeitpunkt T₁ von einem geschätzten Zeitpunkt ab, an dem die Schmelzefront an der Lochplatte ankommen soll, so kann anhand des Zeitpunktes T₁ eine Korrektur des Anfahrvorgangs für ein darauffolgendes Anfahren der Aufbereitungsanlage vorgenommen werden. Beispielsweise kann anhand des Zeitpunkts T₁ der Startzeitpunkt T₀, der Zeitabstand ΔT_{w}, der Zeitabstand ΔT_{G} und/oder der Zeitabstand ΔTₛ korrigiert werden.

Der Erfindung liegt ferner die Aufgabe zugrunde, eine Aufbereitungsanlage zur Herstellung von Kunststoffgranulat zu schaffen, die einen einfachen und sicheren Anfahrvorgang ermöglicht.

Diese Aufgabe wird durch eine Aufbereitungsanlage mit den Merkmalen des Anspruchs 10 gelöst. Die Vorteile der erfindungsgemäßen Aufbereitungsanlage entsprechen den bereits beschriebenen Vorteilen des erfindungsgemäßen Verfahrens. Die Aufbereitungsanlage bzw. die Steuervorrichtung kann insbesondere auch durch die Merkmale der Ansprüche 2 bis 9 weitergebildet werden.

Eine Aufbereitungsanlage nach Anspruch 11 gewährleistet auf einfache Weise das Ermitteln der mindestens einen Förderposition des Kunststoffmaterials. Zur direkten Messung des von der Antriebsvorrichtung abgegebenen Drehmoments kann die mindestens eine Messeinrichtung beispielsweise als Drehmoment-Messeinrichtung ausgebildet sein. Alternativ kann die mindestens eine Messeinrichtung derart ausgebildet sein, dass das von der Antriebsvorrichtung abgegebene Drehmoment aus dem mindestens einen Messsignal berechenbar ist. Hierzu kann die Messeinrichtung beispielsweise als Wirkleistungs-Messeinrichtung oder als Strom-Messeinrichtung ausgebildet sein.

Eine Aufbereitungsanlage nach Anspruch 12 gewährleistet auf einfache Weise das Ermitteln einer bestimmten Förderposition des Kunststoffmaterials. Wird anhand des zugehörigen Messsignals ein Anstieg des Drucks detektiert, so hat die Schmelzefront des aufgeschmolzenen Kunststoffmaterials die zu der Druck-Messeinrichtung gehörige Förderposition erreicht. Ausgehend von der detektierten Förderposition erfolgt dann die Ansteuerung der Granuliervorrichtung.

Eine Aufbereitungsanlage nach Anspruch 13 gewährleistet einen einfachen Anfahrvorgang. Durch die Sprüheinrichtung können die Granuliermesser frühzeitig und ohne die Gefahr einer Überhitzung an die Lochplatte gefahren werden. Durch die eingesprühte Wassermenge wird gewährleistet, dass die Granuliermesser durch die Reibung mit der Lochplatte nicht überhitzen, die Lochplatte jedoch nicht signifikant gekühlt wird, sodass ein Einfrieren bzw. Verstopfen der Düsenöffnungen verhindert wird. Die erzeugten Kunststoffgranulate werden durch den Sprühnebel abgekühlt.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische und teilweise geschnittene Darstellung einer Aufbereitungsanlage zur Herstellung von Kunststoffgranulat mit einer Zweiwellen-Schneckenmaschine und einer Granuliervorrichtung,
- Fig. 2: eine Draufsicht auf die geschnitten dargestellte Zweiwellen-Schneckenmaschine in Fig. 1,
- Fig. 3: einen Querschnitt durch die Zweiwellen-Schneckenmaschine entlang der Schnittlinie III-III in Fig. 1,
- Fig. 4: eine schematische Darstellung der Granuliervorrichtung mit geschlossener Granulierhaube,
- Fig. 5: eine schematische Darstellung der Granuliervorrichtung mit geöffneter Granulierhaube,
- Fig. 6: eine zeitliche Darstellung eines Anfahrvorgangs der Aufbereitungsanlage gemäß einem ersten Ausführungsbeispiel,
- Fig. 7: eine zeitliche Darstellung eines Anfahrvorgangs der Aufbereitungsanlage gemäß einem zweiten Ausführungsbeispiel, und
- Fig. 8: eine zeitliche Darstellung eines Anfahrvorgangs der Aufbereitungsanlage gemäß einem dritten Ausführungsbeispiel.

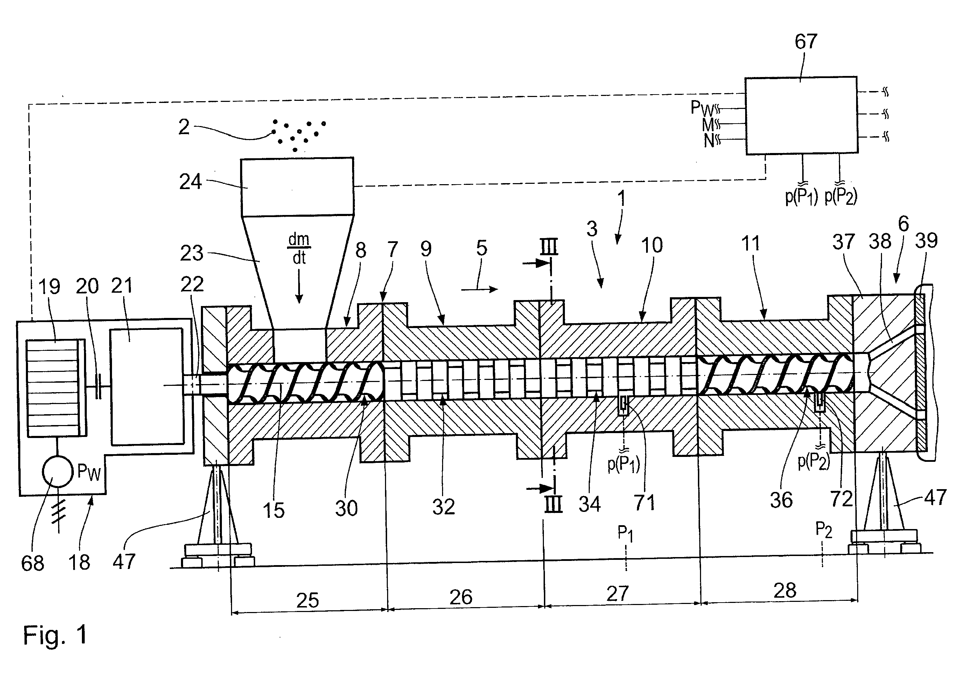

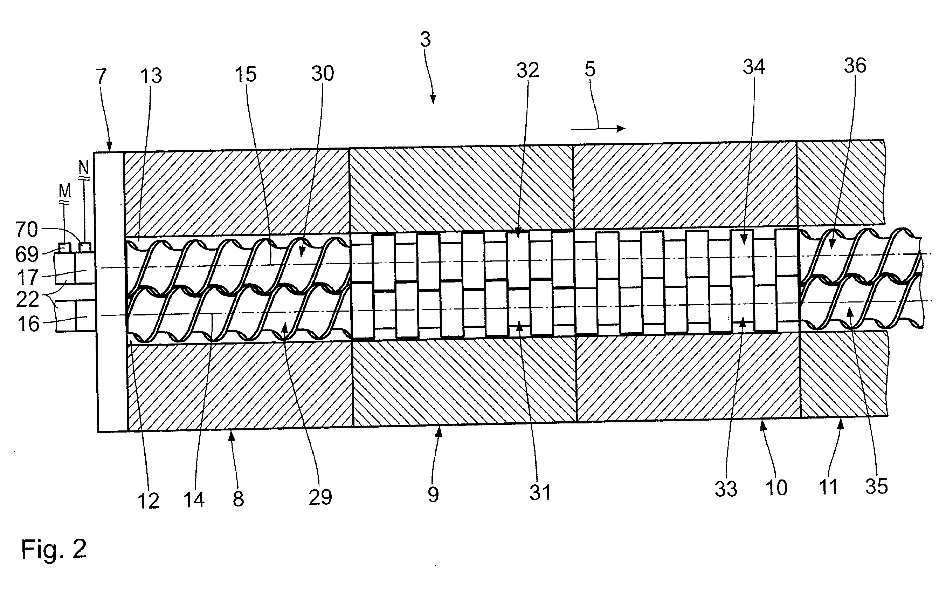

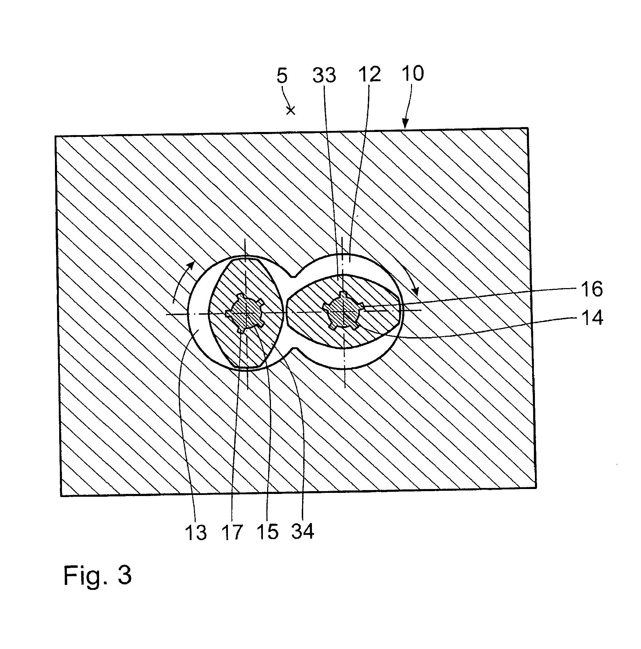

Nachfolgend ist anhand der Fig. 1 bis 6 ein erstes Ausführungsbeispiel der Erfindung beschrieben. Eine Aufbereitungsanlage 1 weist zur Aufbereitung von Kunststoffmaterial 2 eine Zweiwellen-Schneckenmaschine 3 und zur Herstellung von Kunststoffgranulat 4 aus dem aufbereiteten Kunststoffmaterial 2 eine der Schneckenmaschine 3 in einer Förderrichtung 5 des Kunststoffmaterials 2 nachgeordnete Granuliervorrichtung 6 auf.

Die Zweiwellen-Schneckenmaschine 3 umfasst ein Gehäuse 7 aus mehreren hintereinander angeordneten und als Gehäuseschüssen bezeichneten Gehäuseabschnitten 8, 9, 10, 11. In dem Gehäuse 7 ist eine erste Gehäusebohrung 12 und eine diese durchdringende zweite Gehäusebohrung 13 ausgebildet, deren zugehörige Achsen 14, 15 parallel zueinander verlaufen. Die Gehäusebohrungen 12, 13 weisen im Querschnitt die Form einer liegenden Acht auf.

In den Gehäusebohrungen 12, 13 sind konzentrisch zu der jeweils zugehörigen Achse 14, 15 Wellen 16, 17 angeordnet, die mittels einer elektrischen Antriebsvorrichtung 18 drehantreibbar sind. Die Antriebsvorrichtung 18 weist einen elektrischen Antriebsmotor 19 auf, der über eine Kupplung 20 mit einem Verzweigungsgetriebe 21 gekoppelt ist. Das Verzweigungsgetriebe 21 weist zwei Antriebswellen 22 auf, die mit den Wellen 16, 17 gekoppelt sind. Die Wellen 16, 17 werden gleichsinnig, also in gleichen Drehrichtungen um die Achsen 14, 15 angetrieben. Die Achsen 14, 15 werden dementsprechend nachfolgend auch als Drehachsen bezeichnet.

Auf dem dem Verzweigungsgetriebe 21 benachbarten ersten Gehäuseabschnitt 11 ist eine Materialzuführung 23 in Form eines Trichters angeordnet, durch den mittels einer Dosiervorrichtung 24 das aufzubereitende Kunststoffmaterial 2 in die Gehäusebohrungen 12, 13 zugeführt werden kann. Das Kunststoffmaterial 2 wird in der Förderrichtung 5 von dem ersten Gehäuseabschnitt 8 bis zu dem letzten Gehäuseabschnitt 11 durch das Gehäuse 7 gefördert. Die Schneckenmaschine 3 weist in der Förderrichtung 5 hintereinander eine Einzugszone 25, eine Aufschmelzzone 26, eine Mischzone 27 und eine Austragszone 28 auf. Auf den als Zahnwellen ausgebildeten Wellen 16, 17 sind - in Förderrichtung 5 hintereinander - jeweils einander paarweise zugeordnete erste Schneckenelemente 29, 30, erste Knetelemente 31, 32, zweite Knetelemente 33, 34 und zweite Schneckenelemente 35, 36 jeweils als Behandlungselemente angeordnet. Sowohl die Schneckenelemente 29, 30, 35, 36 als auch die Knetelemente 31, 32, 33, 34 greifen ineinander, sind also dicht kämmend ausgebildet.

Die Granuliervorrichtung 6 ist als Unterwassergranulierung ausgebildet. Die Granuliervorrichtung 6 weist ein Granulierkopfgehäuse 37 auf, das am Ende des Gehäuses 7 befestigt ist. In dem Granulierkopfgehäuse 37 ist mindestens ein Kanal 38 ausgebildet, durch den das aufgeschmolzene und zu granulierende Kunststoffmaterial 2 einer Lochplatte 39 zugeführt wird, die an der dem Gehäuse 7 abgewandten Seite des Granulierkopfgehäuses 37 angebracht ist. Am Granulierkopfgehäuse 37 ist weiterhin eine erste Granulierteilhaube 40 einer Granulierhaube 41 angebracht. Das Granulierkopfgehäuse 37 dient also als Träger für die Lochplatte 39 und die erste Granulierteilhaube 40. Die Lochplatte 39 weist eine Vielzahl von nicht näher bezeichneten Düsenöffnungen auf.

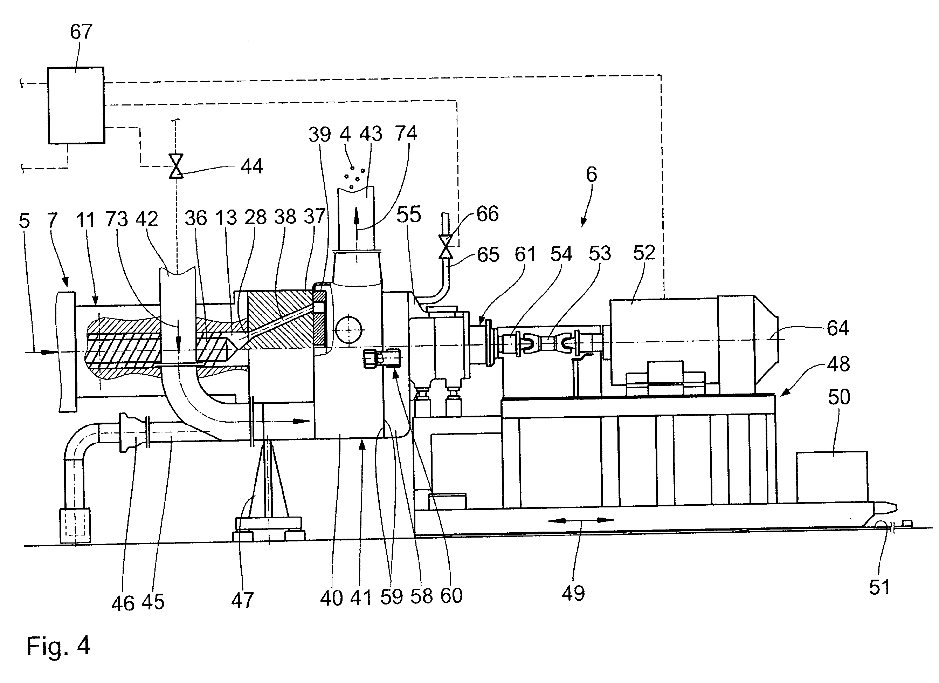

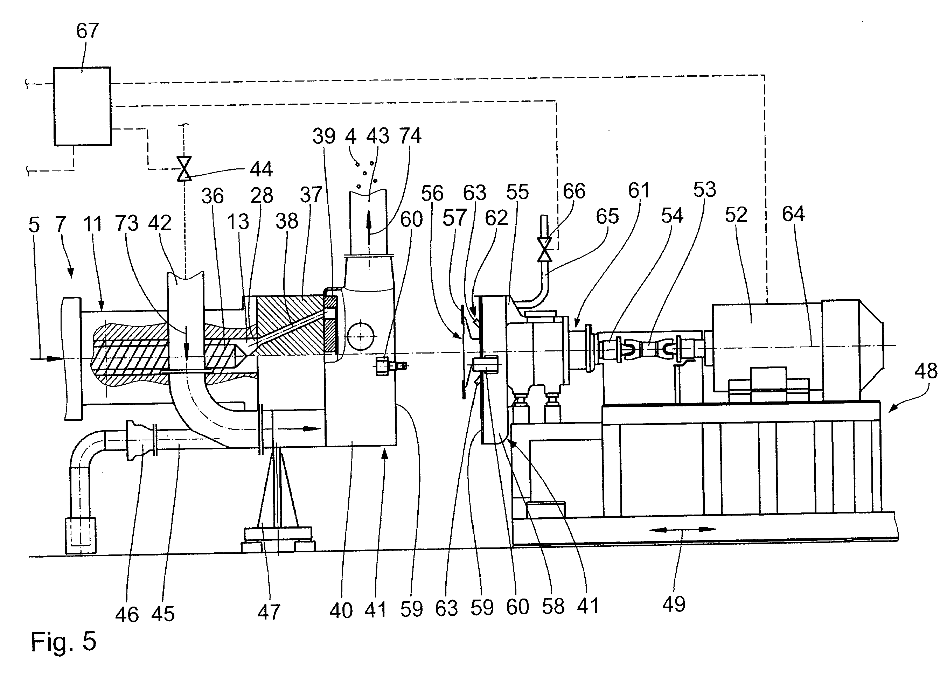

In die Granulierteilhaube 40 mündet in deren unteren Bereich eine Zulaufleitung 42 für Granulierwasser ein. Das in die Granulierhaube 41 eingeleitete Granulierwasser wird über eine Ablaufleitung 43, die im oberen Bereich der Granulierteilhaube 40 ausmündet, wieder abgeführt. Der Granulierwasserstrom wird über ein Ventil 44 gesteuert, das in der Zulaufleitung 42 angeordnet ist. Das Ventil 44 ist in den Fig. 4 und 5 lediglich schematisch dargestellt. Die Ablaufleitung 43 mündet bezogen auf die Förderrichtung 5 hinter der Lochplatte 39 aus der Granulierteilhaube 40 aus. Im Bereich der Einmündung der Zulaufleitung 42 in die Granulierteilhaube 40 zweigt aus dieser ein Ablassrohr 45 ab, in dem sich ein Ablassventil 46 zum Ablassen des Granulierwassers befindet. Die Schneckenmaschine 3, die zugehörige Antriebsvorrichtung 18 und der bisher beschriebene Teil der Granuliervorrichtung 6 sind ortsfest angeordnet und mittels Stützen 47 an einem Fundament befestigt.

Der noch nicht beschriebene Teil der Granuliervorrichtung 6 ist auf einem Wagen 48 angeordnet, der in einer Längsrichtung 49 mittels eines Antriebsmotors 50 auf Schienen 51 verfahrbar ist. Auf dem Wagen 48 ist ein Granulierantriebsmotor 52 angeordnet, der über eine Kupplung 53 eine Messerwelle 54 antreibt, die in einem Messerwellenlager 55 drehbar gelagert ist. An dem der Lochplatte 39 zugewandten Ende der Messerwelle 54 ist ein als Messerhalter dienender Messerkopf 56 drehfest angebracht, an dessen der Lochplatte 39 zugewandten Seite radial nach außen stehende Granuliermesser 57 auswechselbar befestigt sind.

An der der Lochplatte 39 zugewandten Seite des Messerwellenlagers 55 ist eine zweite Granulierteilhaube 58 befestigt, die zusammen mit der ersten Granulierteilhaube 40 die Granulierhaube 41 bildet. Die Granulierteilhauben 40, 58 weisen einander angepasste Anlageflächen 59 auf, die beim Zusammenfahren der Granuliervorrichtung 6 dicht aneinander liegen. Dies ist in Fig. 4 dargestellt. Die Granulierteilhauben 40, 58 sind im zusammengefahrenen Zustand mittels einer Verriegelungseinrichtung 60 verriegelbar.

Der Granulierantriebsmotor 52, die Kupplung 53, die Messerwelle 54 mit dem Messerwellenlager 55 sowie der Messerkopf 56 mit den daran befestigten Granuliermessern 57 bilden eine Schneideinrichtung 61, die die durch die Lochplatte 39 gepressten Kunststoffstränge zerschneidet und so das Kunststoffgranulat 4 erzeugt.

Für die Inbetriebnahme der Granuliervorrichtung 6 weist diese eine Sprüheinrichtung 62 mit mehreren Sprühdüsen 63 auf. Die Sprühdüsen 63 sind um eine Drehachse 64 der Schneideinrichtung 61 verteilt an dem Messerwellenlager 55 angeordnet und in Richtung der Granuliermesser 57 ausgerichtet. Die Sprühdüsen 63 werden über eine Zuführleitung 65 mit Sprühwasser versorgt. In der Zuführleitung 65 ist ein Ventil 66 angeordnet, das zur Steuerung der Zufuhr des Sprühwassers dient.

Zur Steuerung der Aufbereitungsanlage 1 weist diese eine Steuervorrichtung 67 auf, die zur Steuerung in Signalverbindung mit der Granuliervorrichtung 6, der Antriebsvorrichtung 18 und der Dosiervorrichtung 24 ist. Die Steuervorrichtung 67 steuert insbesondere die Antriebsmotoren 19, 50 und den Granulierantriebsmotor 52 sowie die Ventile 44, 66.

Zur Steuerung des Anfahrvorgangs sowie des Betriebs der Aufbereitungsanlage 1 sind verschiedene Messsensoren vorgesehen, die in Signalverbindung mit der Steuervorrichtung 67 sind und verschiedene Messsignale zur Steuerung der Aufbereitungsanlage 1 bereitstellen. Die Antriebsvorrichtung 18 weist eine Wirkleistungs-Messeinrichtung 68 auf, die zur Messung der von der Antriebsvorrichtung 18 aufgenommenen Wirkleistung P_{W} dient. Darüber hinaus weist die Aufbereitungsanlage 1 eine Drehmoment-Messeinrichtung 69 und eine Drehzahl-Messeinrichtung 70 auf, die zwischen der Antriebsvorrichtung 18 und der Schneckenmaschine 3 angeordnet sind. Die Drehmoment-Messeinrichtung 69 dient zur Messung des Drehmoments M der Antriebswellen 22, wohingegen die Drehzahl-Messeinrichtung 70 zur Messung der Wellendrehzahl N der Antriebswellen 22 bzw. der Wellen 16, 17 dient. Zusätzlich sind im Bereich der Gehäuseabschnitte 10 und 11 zwei Druck-Messeinrichtungen 71, 72 in eine der Gehäusebohrungen 12, 13 geführt. Die Druck-Messeinrichtungen 71, 72 messen den Druck p im Verfahrensteil der Schneckenmaschine 3 an der Förderposition P₁ bzw. P₂. Die Druck-Messeinrichtungen 71, 72 sind beispielsweise als Druckschalter ausgebildet.

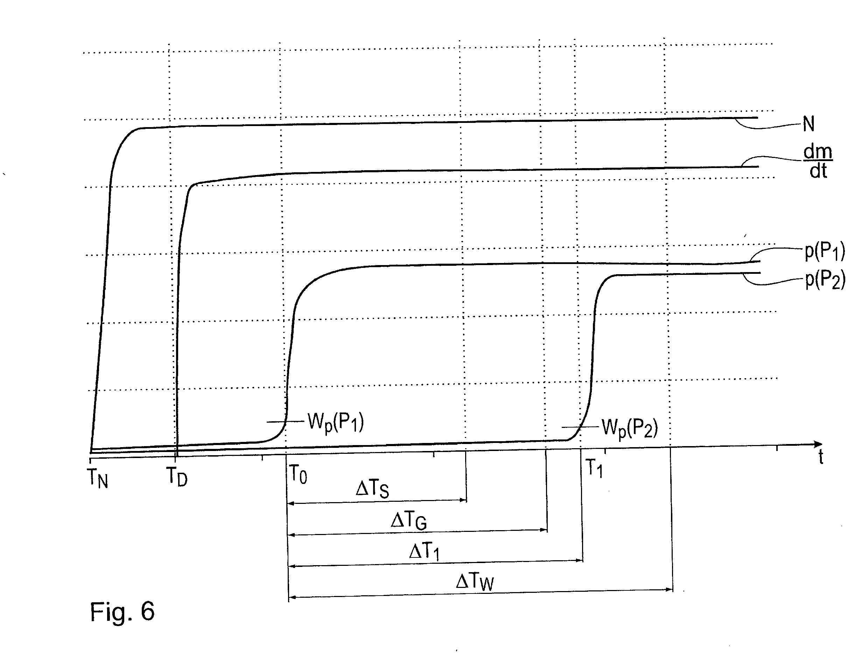

Nachfolgend ist anhand von Fig. 6 ein Anfahrvorgang gemäß einem ersten Ausführungsbeispiel beschrieben. Die Aufbereitungsanlage 1 befindet sich in einem leergefahrenen Zustand. Das bedeutet, dass sich kein Kunststoffmaterial 2 in der Schneckenmaschine 3 befindet. Zunächst wird die Schneckenmaschine 3 angefahren. Hierzu werden ab dem Zeitpunkt T_{N} die Wellen 16, 17 mittels der Antriebsvorrichtung 18 gleichsinnig drehangetrieben. Die Wellendrehzahl N wird mittels der Drehzahl-Messeinrichtung 70 gemessen und das zugehörige Messsignal an die Steuervorrichtung 67 übermittelt. Das der Wellendrehzahl N entsprechende Messsignal ist in Fig. 6 mit N gekennzeichnet.

Anschließend wird mittels der Dosiervorrichtung 24 das aufzubereitende Kunststoffmaterial 2 zugeführt. Hierzu wird zum Zeitpunkt T_{D} die Dosiervorrichtung 24 gestartet, die mit einer einstellbaren Dosierrate dm/dt aufzubereitendes Kunststoffmaterial 2 durch die Materialzuführung 23 in die Schneckenmaschine 3 zuführt. Die Dosierrate dm/dt ist in Fig. 6 mit gekennzeichnet.

Das zugeführte Kunststoffmaterial 2 wird nun durch die Einzugszone 25 in die Aufschmelzzone 26 gefördert und dort aufgeschmolzen. Das in der Aufschmelzzone 26 aufgeschmolzene Kunststoffmaterial 2 gelangt anschließend in die Mischzone 27, wo eine intensive Durchmischung und Homogenisierung des Kunststoffmaterials 2 stattfindet. Erreicht die Schmelzefront des Kunststoffmaterials 2 die Förderposition P₁, so steigt der Druck p in den Gehäusebohrungen 12, 13 an der Förderposition P₁ an, was mittels der Druck-Messeinrichtung 71 messbar ist. Das zu der Druck-Messeinrichtung 71 gehörige Messsignal ist in Fig. 6 mit p(P₁) gekennzeichnet. Das Messsignal p(P₁) wird in der Steuervorrichtung 67 ausgewertet und mit einem Schwellwert Wp(P₁) verglichen. Gilt für das Messsignal p(P₁) ≥ Wₚ(P₁), so bedeutet dies, dass die Schmelzefront die Förderposition P₁ erreicht hat. Der zugehörige Zeitpunkt wird von der Steuervorrichtung 67 als Startzeitpunkt T₀ definiert, ab dem ein vordefinierter Inbetriebnahmevorgang für die Granuliervorrichtung 6 gestartet wird.

Ausgehend von dem Startzeitpunkt T₀ wird zunächst in einem Zeitabstand ΔT_{S} die Sprüheinrichtung 62 bzw. das Ventil 66 der Sprüheinrichtung 62 angesteuert, sodass die Sprühdüsen 63 in der Granulierhaube 41 einen Sprühnebel erzeugen. Weiterhin wird ausgehend von dem Startzeitpunkt T₀ in einem Zeitabstand ΔT_{G} die Schneideinrichtung 61 der Granuliervorrichtung 6 angesteuert und die gegen die Lochplatte 39 anliegenden Granuliermesser 57 mittels des Granulierantriebsmotors 52 um die Drehachse 64 drehangetrieben. Vorzugsweise gilt ΔT_{G} > ΔT_{S}. Durch den erzeugten Sprühnebel werden die rotierenden Granuliermesser 57 soweit gekühlt, dass diese aufgrund der Reibung mit der Lochplatte 39 nicht überhitzen. Erreicht das heiße Kunststoffmaterial 2 die Lochplatte 39, werden nach der Lochplatte 39 in üblicher Weise Kunststoffstränge erzeugt, die mittels der Granuliermesser 57 zu Kunststoffgranulat 4 zerschnitten werden. Da die Lochplatte 39 mittels des Sprühnebels nur geringfügig gekühlt wird, verstopfen die Düsenöffnungen der Lochplatte 39 nicht. Das Kunststoffgranulat 4 wird durch den Sprühnebel abgekühlt und im Einlaufbereich der Granulierhaube 41 gesammelt. Ausgehend von dem Startzeitpunkt T₀ wird in einem Zeitabstand ΔT_{W} das Ventil 44 angesteuert und das Granulierwasser in einer Zulaufrichtung 73 durch die Zulaufleitung 42 in die Granulierhaube 41 eingeleitet. Vorzugsweise gilt: ΔT_{W} > ΔT_{G}. Das Granulierwasser wird in der Granulierhaube 41 nach oben umgelenkt und nimmt das im Einlaufbereich aufgrund des Anfahrvorgangs befindliche Kunststoffgranulat 4 sowie das an der Lochplatte 39 mittels der Granuliermesser 57 erzeugte Kunststoffgranulat 4 mit. Das Granulat-Wasser-Gemisch wird anschließend in einer Ablaufrichtung 74 durch die Ablaufleitung 43 abgeführt.

Der jeweilige Zeitabstand ΔT_{S}, ΔT_{G} und/oder ΔT_{W} ist in der Steuervorrichtung 67 vordefiniert und wird vorzugsweise vor dem Startzeitpunkt T₀ in Abhängigkeit der Wellendrehzahl N und/oder der Dosierrate dm/dt berechnet. Die Berechnung erfolgt qualitativ derart, dass der jeweilige Zeitabstand ΔT_{S}, ΔT_{G}, ΔT_{W} umso kleiner ist, je größer die Wellendrehzahl N und/oder je größer die Dosierrate dm/dt ist.

Erreicht die Schmelzefront des Kunststoffmaterials 2 die Förderposition P₂, so nimmt der Druck p(P₂) in den Gehäusebohrungen 12, 13 an der Förderposition P₂ zu. Das zu der Druck-Messeinrichtung 72 gehörige Messsignal ist in Fig. 6 mit p(P₂) gekennzeichnet. Das Messsignal p(P₂) wird der Steuervorrichtung 67 zugeführt, die dieses mit einem Schwellwert Wₚ(P₂) vergleicht. Wenn für das Messsignal p(P₂)≥ Wₚ(P₂) gilt, so bedeutet dies, dass die Schmelzefront des Kunststoffmaterials 2 die Förderposition P₂ erreicht hat. Die Steuervorrichtung 67 definiert den zugehörigen Zeitpunkt als T₁ und ermittelt einen zugehörigen Zeitabstand ΔT₁ zwischen dem Startzeitpunkt T₀ und dem Zeitpunkt T₁.

Nachdem der jeweilige Zeitabstand ΔT_{S}, ΔT_{G} und ΔT_{W} auf einer geschätzten Fortbewegungsgeschwindigkeit der Schmelzefront basiert und die geschätzte Fortbewegungsgeschwindigkeit von der tatsächlichen Fortbewegungsgeschwindigkeit abweichen kann, kann mittels des Zeitpunktes T₁ bzw. des Zeitabstands ΔT₁ ein nachfolgender Anfahrvorgang optimiert werden, indem der jeweilige Zeitabstand ΔT_{S}, ΔT_{G} und/oder ΔT_{W} in Abhängigkeit von T₁ bzw. ΔT₁ angepasst wird, um den Anfahrvorgang zu optimieren.

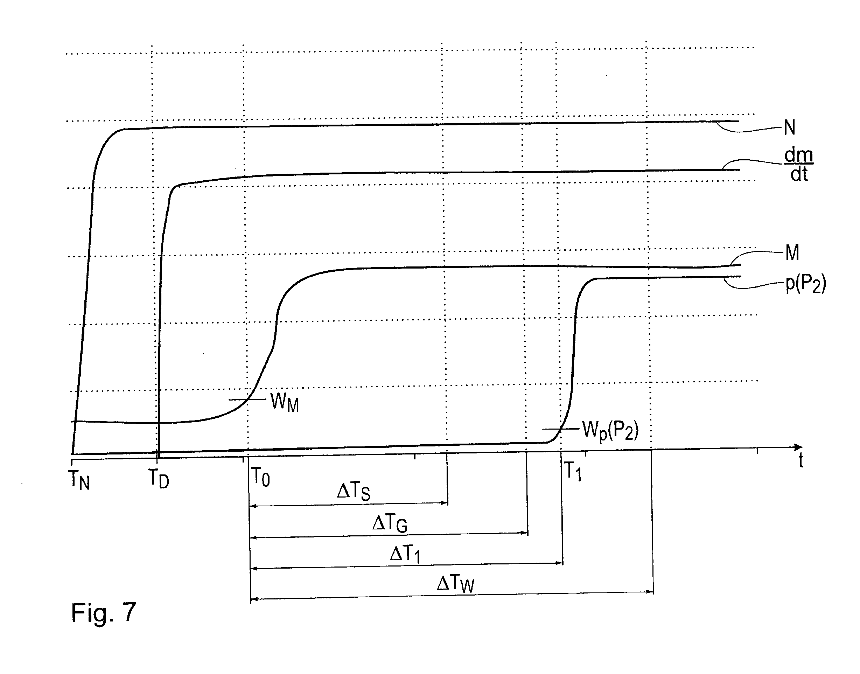

Nachfolgend ist anhand von Fig. 7 ein zweites Ausführungsbeispiel der Erfindung beschrieben. Im Unterschied zu dem ersten Ausführungsbeispiel weist die Aufbereitungsanlage 1 lediglich die Druck-Messeinrichtung 72 an der Förderposition P₂ auf, nicht jedoch die Druck-Messeinrichtung an der Förderposition P₁. Die Förderposition P₁ kann somit nicht länger unmittelbar gemessen werden, sondern muss während des Anfahrvorgangs geschätzt werden. Hierzu wird das Messsignal der Drehmoment-Messeinrichtung 69 in der Steuervorrichtung 67 ausgewertet. Das zu der Drehmoment-Messeinrichtung 69 gehörige Messsignal ist in Fig. 7 mit M gekennzeichnet. Wenn das zugeführte Kunststoffmaterial 2 in der Aufschmelzzone 26 aufgeschmolzen und in der Mischzone 27 homogenisiert wird, steigt das zur Aufrechterhaltung der Drehzahl N erforderliche Drehmoment M deutlich an. Der Anstieg des Drehmoments M wird anhand des Messsignals M detektiert, indem das Messsignal M mit einem Schwellwert W_{M} verglichen wird. Wenn für das Messsignal M ≥ W_{M} gilt, so wird dies von der Steuervorrichtung 67 derart interpretiert, dass die Schmelzefront die Förderposition P₁ erreicht hat. Die Steuervorrichtung 67 definiert in der bereits beschriebenen Weise den Startzeitpunkt T₀, von dem ab der jeweilige Zeitabstand ΔT_{S}, ΔT_{G} und ΔT_{W} zu laufen beginnt. Da das Erreichen der Förderposition P₁ anhand des Drehmoments M lediglich geschätzt werden kann, kommt der Korrektur der Ansteuergrößen T₀, ΔT_{S}, ΔT_{G} und/oder ΔT_{W} mittels des Zeitpunkts T₁ bzw. des Zeitabstands ΔT₁ eine hohe Bedeutung zu. Dadurch, dass lediglich eine Druck-Messeinrichtung 72 erforderlich ist, weist die Aufbereitungsanlage 1 einen einfachen und zuverlässigen Aufbau auf. Hinsichtlich des weiteren Aufbaus und der weiteren Funktionsweise der Aufbereitungsanlage 1 wird auf das erste Ausführungsbeispiel verwiesen.

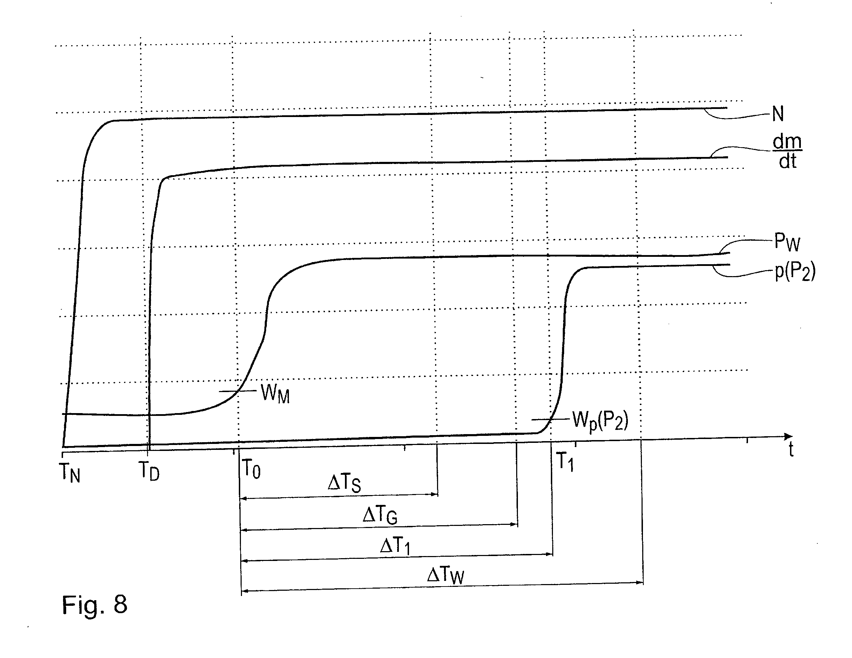

Nachfolgend ist anhand von Fig. 8 ein drittes Ausführungsbeispiel der Erfindung beschrieben. Im Unterschied zu dem ersten Ausführungsbeispiel weist die Aufbereitungsanlage 1 lediglich die Druck-Messeinrichtung 72 an der Förderposition P₂, jedoch keine Druck-Messeinrichtung an der Förderposition P₁ auf. Darüber hinaus weist die Aufbereitungsanlage 1 keine Drehmoment-Messeinrichtung zur direkten Messung des von der Antriebsvorrichtung 18 aufgebrachten Drehmoments M auf. Das Erreichen der Förderposition P₁ wird anhand der von der Antriebsvorrichtung 18 aufgenommenen Wirkleistung P_{W} ermittelt. Da die Drehzahl N nach dem Anfahren der Antriebsvorrichtung 18 im Wesentlichen konstant ist, entspricht die aufgenommene Wirkleistung P_{W} qualitativ dem von der Antriebsvorrichtung 18 aufgebrachten Drehmoment M. Die aufgenommene Wirkleistung P_{W} wird mittels der Wirkleistungs-Messeinrichtung 68 gemessen und das zugehörige Messsignal der Steuervorrichtung 67 zugeführt. Das zu der Wirkleistungs-Messeinrichtung 68 gehörige Messsignal ist in Fig. 8 mit P_{W} gekennzeichnet. Das Messsignal P_{W} wird mittels der Steuervorrichtung 67 ausgewertet und mit dem Schwellwert W_{M} verglichen. Gilt für das Messsignal P_{W} ≥ W_{M}, so wird dies von der Steuervorrichtung 67 derart interpretiert, dass die Schmelzefront die Förderposition P₁ erreicht hat. Die Steuervorrichtung 67 definiert in der bereits beschriebenen Weise den Startzeitpunkt T_{0.} Ausgehend von dem Startzeitpunkt T₀ wird in der beschriebenen Weise die Granuliervorrichtung 6 in Betrieb genommen. Dadurch, dass keine Drehmoment-Messeinrichtung 69 benötigt wird, weist die Aufbereitungsanlage 1 einen vereinfachten Aufbau auf. Hinsichtlich des weiteren Aufbaus und der weiteren Funktionsweise der Aufbereitungsanlage 1 wird auf die vorangegangenen Ausführungsbeispiele verwiesen.

Mit der erfindungsgemäßen Aufbereitungsanlage 1 und dem erfindungsgemäßen Verfahren ist ein einfaches und sicheres Anfahren möglich. Das Anfahren erfolgt auf direkter Weise ohne ein Anfahrventil bzw. ohne die Nutzung eines vorhandenen Anfahrventils. Bei der erfindungsgemäßen Aufbereitungsanlage 1 und dem erfindungsgemäßen Verfahren wird das Anfahren ausschließlich durch die Analyse von Messsignalen der Aufbereitungsanlage 1 gesteuert, sodass sich nach dem Dosierstart der Fluss des Kunststoffmaterials 2 in Richtung der Lochplatte 39 ermitteln lässt und dadurch erreicht wird, dass der Fluss des Kunststoffmaterials 2 durch die Lochplatte 39, das Anliegen und Rotieren der Granuliermesser 57 an der Lochplatte 39 sowie die Zufuhr des Granulierwassers in die Schneid- bzw. Granulierhaube 41 in der gewünschten Zeitabfolge erfolgt. Hierdurch ist gewährleistet, dass die Funktion eines Anfahrventils nicht benötigt wird und dieses dementsprechend entfallen kann.

Die in der Steuervorrichtung 67 vordefinierten Zeitabstände ΔT_{S}, ΔT_{G} und ΔT_{W} sind vorzugsweise in Abhängigkeit des aufzubereitenden Kunststoffmaterials 2 und der Rezeptur definiert. Durch die Druck-Messeinrichtung 72 kann das Anfahren der Aufbereitungsanlage 1 bzw. der Granuliervorrichtung 6 in Abhängigkeit des Kunststoffmaterials 2 und der Rezeptur kontinuierlich verbessert werden, sodass bei einem darauffolgenden optimierten Anfahrvorgang weniger Kunststoffgranulatausschuss produziert wird. Die Druck-Messeinrichtung 72 ist vorzugsweise möglichst nahe an der Lochplatte 39 angeordnet. Dies kann beispielsweise am Ende des letzten Gehäuseabschnitts 11 - wie dies in Fig. 1 dargestellt ist - oder im Granulierkopfgehäuse 37 unmittelbar vor der Lochplatte 39 sein, um den Druck in einem der Kanäle 38 zu messen. Da die Lokalisierung der Schmelzefront umso einfacher möglich ist, je zäher das aufgeschmolzene Kunststoffmaterial 2 ist, werden gegebenenfalls einzumischende viskositätsmindernde Stoffe, wie beispielsweise Peroxid, erst nach dem erfolgreichen Anfahren der Granuliervorrichtung 6 zudosiert.

Auch beim Einsatz einer der Schneckenmaschine 3 nachgeschalteten Schmelzepumpe zur Druckerhöhung kann das erfindungsgemäße Verfahren zur Anwendung kommen, da durch den zeitlich gesteuerten Anfahrvorgang dieser Schmelzepumpe die Verweilzeit der Schmelzefront vor der Granuliervorrichtung 6 lediglich um eine bestimmte Zeitdauer verlängert wird, wobei diese Zeitdauer bei dem Inbetriebnahmevorgang der Granuliervorrichtung 6 in einfacher Weise additiv berücksichtigt werden kann. Das erfindungsgemäße Verfahren ist für alle Polymere einsetzbar, insbesondere bei Polypropylen, Polyethylen, Styrol-Butadien-Kautschuk oder ähnlichen Styrolpolymerisaten oder Butadien-Copolymerisaten, die sich in einer Unterwassergranulierung schneiden lassen.

Prinzipiell kann der zeitliche Verlauf der Schmelzefront mit beliebig vielen Druck-Messeinrichtungen überwacht werden, die entlang des Verfahrensteils der Schneckenmaschine 3, einer gegebenenfalls vorhandenen Schmelzepumpe und/oder Siebvorrichtung und in dem Granulierkopfgehäuse 37 unmittelbar vor der Lochplatte 39 eingebaut sind. Durch die Korrektur der Ansteuergrößen können nachfolgende Anfahrvorgänge automatisch optimiert und an sich verändernde Zustände angepasst werden, die sich beispielsweise durch einen Siebwechsel, einen Lochplattenwechsel oder einen Verschleiß der Behandlungselemente ergeben können.

Das erfindungsgemäße Verfahren ist auch bei einer Granuliervorrichtung 6 ohne eine Sprüheinrichtung anwendbar. Um das Einfrieren bzw. Verstopfen der Düsenöffnungen in der Lochplatte 39 zu verhindern, muss durch den vordefinierten Inbetriebnahmevorgang sichergestellt sein, dass ein Mindestfluss des Kunststoffmaterials 2 durch die Lochplatte 39 bereits stattfindet, bevor das Granulierwasser in die Granulierhaube 41 eintritt. Der Zeitabstand ΔT_{W} muss also so gewählt sein, dass das Granulierwasser in einem gewünschten Zeitbereich in die Granulierhaube 41 eintritt, nachdem das Kunststoffmaterial 2 die Lochplatte 39 erreicht hat. Durch die Sprüheinrichtung 62 kann der Anfahrvorgang vereinfacht und eine Bildung von Kunststoff-Agglomeraten an den Granuliermessern 57 zuverlässig vermieden werden. Die Sprüheinrichtung 62 ermöglicht einen frühzeitigen Kontakt der Granuliermesser 57 mit der Lochplatte 39 und gewährleistet, dass bei einsetzendem Fluss des Kunststoffmaterials 2 sofort Kunststoffgranulate 4 geschnitten und in dem Sprühnebel gekühlt werden. Die eingesprühte Wassermenge wird dabei so gewählt, dass die Granuliermesser 57 durch die Reibung mit der Lochplatte 39 nicht überhitzen, die Lochplatte 39 jedoch nicht signifikant gekühlt wird, um ein Einfrieren der Düsenöffnungen zu vermeiden. Zusammen mit der Ansteuerung der Sprüheinrichtung 62 wird der Antriebsmotor 50 angesteuert, der die Granuliermesser 57 bis zum Anliegen an der Lochplatte 39 in Richtung der Lochplatte 39 fährt. Das Ansteuern der Sprüheinrichtung 62 bzw. der Schneideinrichtung 61 soll einige Sekunden vor der Ankunft der Schmelzefront an der Lochplatte 39 stattfinden. Optional kann die Sprüheinrichtung 62 bei niederviskosen Polymerschmelzen bereits mit dem Anfahren der Antriebsvorrichtung 18 aktiviert werden.

Bei einem Produktwechsel muss die Aufbereitungsanlage 1 vor einem erneuten Anfahren zunächst leergefahren werden.

Das erfindungsgemäße Verfahren kann bei beliebigen Schneckenmaschinen eingesetzt werden, wie beispielsweise bei gleichsinnig drehenden und dicht kämmenden Mehrwellen-Extrudern bzw. Zweiwellen-Extrudern, bei Einwellen-Extrudern oder bei kontinuierlichen Mischern.

## Patentansprüche

1. Verfahren zum Anfahren einer Aufbereitungsanlage zur Herstellung von Kunststoffgranulat, umfassend folgende Schritte:
- Bereitstellen einer Aufbereitungsanlage (1) mit
-- einer Schneckenmaschine (3),
-- einer elektrischen Antriebsvorrichtung (18) für die Schneckenmaschine (3),
-- einer Dosiervorrichtung (24) zum Zuführen eines aufzubereitenden Kunststoffmaterials (2) in die Schneckenmaschine (3),
-- einer der Schneckenmaschine (3) in einer Förderrichtung (5) des Kunststoffmaterials (2) nachgeordneten Granuliervorrichtung (6), und
-- einer Steuervorrichtung (67),
- Antreiben der Schneckenmaschine (3) mittels der Antriebsvorrichtung (18),
- Zuführen von aufzubereitendem Kunststoffmaterial (2) in die Schneckenmaschine (3) mittels der Dosiervorrichtung (24),
- Ermitteln mindestens einer Förderposition (P₁, P₂) des Kunststoffmaterials (2) in der Schneckenmaschine (3) durch Auswertung mindestens eines zu der Aufbereitungsanlage (1) ermittelten Messsignals (p(P₁), p(P₂); M, p(P₂); P_{W}, p(P₂)) mittels der Steuervorrichtung (67), und
- Ansteuern der Granuliervorrichtung (6) in Abhängigkeit der mindestens einen ermittelten Förderposition (P₁, P₂),
**dadurch gekennzeichnet**,
**dass** anhand des mindestens einen Messsignals (p(P₁); M; P_{W}) mittels der Steuervorrichtung (67) ein Startzeitpunkt T₀ zum Starten eines vordefinierten Inbetriebnahmevorgangs für die Granuliervorrichtung (6) bestimmt wird, und
dass ausgehend von dem Startzeitpunkt T₀ in einem Zeitabstand ΔT_{W} ein Ventil (44) der Granuliervorrichtung (6) zur Zufuhr von Granulierwasser angesteuert wird.

2. Verfahren nach Anspruch 1, **dadurch gekennzeichnet**,
**dass** ausgehend von dem Startzeitpunkt T₀ in einem Zeitabstand ΔT_{G} eine Schneideinrichtung (61) der Granuliervorrichtung (6) angesteuert wird.

3. Verfahren nach Anspruch 1 oder 2, **dadurch gekennzeichnet**,
**dass** mittels einer Sprüheinrichtung (62) der Granuliervorrichtung (6) ein Sprühnebel erzeugt wird.

4. Verfahren nach Anspruch 3, **dadurch gekennzeichnet**,
dass die Sprüheinrichtung (62) ausgehend von dem Startzeitpunkt T₀ in einem Zeitabstand ΔT_{S} angesteuert wird.

5. Verfahren nach einem der Ansprüche 1 bis 4, **dadurch gekennzeichnet**,
dass mindestens einer der Zeitabstände ΔT_{W}, ΔT_{G} und ΔT_{S} in Abhängigkeit mindestens einer der Zustandsgrößen Wellendrehzahl und Dosierrate ermittelt wird.

6. Verfahren nach einem der Ansprüche 1 bis 5, **dadurch gekennzeichnet**,
dass das mindestens eine Messsignal (M; P_{W}) ein Drehmoment der Antriebsvorrichtung (18) charakterisiert und bei Überschreiten eines Schwellwertes W_{M} mittels der Steuervorrichtung (67) der Startzeitpunkt T₀ definiert wird.

7. Verfahren nach einem der Ansprüche 1 bis 6, **dadurch gekennzeichnet**,
**dass** das mindestens eine Messsignal (p(P₁), p(P₂)) einen von dem Kunststoffmaterial (2) erzeugten Druck an einer bestimmten Förderposition (P₁, P₂) charakterisiert.

8. Verfahren nach Anspruch 7, **dadurch gekennzeichnet**,
dass bei Überschreiten eines Schwellwertes Wₚ mittels der Steuervorrichtung (67) der Startzeitpunkt T₀ definiert wird.

9. Verfahren nach Anspruch 7 oder 8, **dadurch gekennzeichnet**,
dass bei Überschreiten eines Schwellwertes Wp mittels der Steuervorrichtung (67) ein Zeitpunkt T₁ ermittelt wird und mindestens eine Ansteuergröße aus der Gruppe Startzeitpunkt T₀, Zeitabstand ΔT_{W}, Zeitabstand ΔT_{G} und der Zeitabstand ΔT_{S} anhand des Zeitpunkts T₁ für ein darauffolgendes Anfahren korrigiert wird.

10. Aufbereitungsanlage zur Herstellung von Kunststoffgranulat mit
- einer Schneckenmaschine (3),
- einer elektrischen Antriebsvorrichtung (18) zum Antreiben der Schneckenmaschine (3),
- einer Dosiervorrichtung (24) zum Zuführen eines aufzubereitenden Kunststoffmaterials (2) in die Schneckenmaschine (3),
- einer der Schneckenmaschine (3) in einer Förderrichtung (5) des Kunststoffmaterials (2) nachgeordneten Granuliervorrichtung (6),
- einer Steuervorrichtung (67), wobei die Steuervorrichtung (67) derart ausgebildet ist, dass
- mittels der Antriebsvorrichtung (18) die Schneckenmaschine (3) angetrieben wird,
-- die Dosiervorrichtung (24) zum Zuführen von aufzubereitendem Kunststoffmaterial (2) in die Schneckenmaschine (3) angesteuert wird,
-- mindestens eine Förderposition (P₁, P₂) des Kunststoffmaterials (2) in der Schneckenmaschine (3) durch Auswertung mindestens eines zu der Aufbereitungsanlage (1) ermittelten Messsignals (p(P₁), p(P₂); M, p(P₂); P_{W}, p(P₂)) ermittelt wird , und
- die Granuliervorrichtung (6) in Abhängigkeit der mindestens einen ermittelten Förderposition (P₁, P₂) angesteuert wird,
**dadurch gekennzeichnet**,
dass die Steuervorrichtung (67) weiterhin derart ausgebildet ist, dass anhand des mindestens einen Messsignals (p(P₁); M; P_{W}) mittels der Steuervorrichtung (67) ein Startzeitpunkt T₀ zum Starten eines vordefinierten Inbetriebnahmevorgangs für die Granuliervorrichtung (6) bestimmt wird, und
dass ausgehend von dem Startzeitpunkt T₀ in einem Zeitabstand ΔT_{W} ein Ventil (44) der Granuliervorrichtung (6) zur Zufuhr von Granulierwasser angesteuert wird.

11. Aufbereitungsanlage nach Anspruch 10, **dadurch gekennzeichnet**, **dass** die Antriebsvorrichtung (18) zur Ermittlung des mindestens einen Messsignals (M; P_{W}) mindestens eine Messeinrichtung (69; 68) aufweist, wobei das mindestens eine Messsignals (M; P_{W}) ein Drehmoment der Antriebsvorrichtung (18) charakterisiert.

12. Aufbereitungsanlage nach Anspruch 10 oder 11, **dadurch gekennzeichnet**,
dass zur Ermittlung des mindestens einen Messsignals (p(P₁), p(P₂)) mindestens eine Druck-Messeinrichtung (71, 72) vorgesehen ist, wobei das mindestens eine Messsignal (p(P₁), p(P₂)) einen von dem Kunststoffmaterial (2) erzeugten Drucks an einer bestimmten Förderposition (P₁, P₂) charakterisiert.

13. Aufbereitungsanlage nach einem der Ansprüche 10 bis 12, **dadurch gekennzeichnet**,
**dass** die Granuliervorrichtung (6) eine Sprüheinrichtung (62) zum Erzeugen eines Sprühnebels aufweist.

## Claims

1. Method for starting up a processing plant for producing plastics material granulate, comprising the following steps:
- providing a processing plant (1) having
-- a screw machine (3),
-- an electric drive device (18) for the screw machine (3),
-- a metering device (24) for feeding a plastics material (2) to be processed into the screw machine (3),
-- a granulating device (6) arranged downstream of the screw machine (3) in a conveying direction (5) of the plastics material (2), and
-- a control device (67),
- driving the screw machine (3) by means of the drive device (18),
- feeding the plastics material (2) to be processed into the screw machine (3) by means of the metering device (24),
- determining at least one conveying position (P₁, P₂) of the plastics material (2) in the screw machine (3) by evaluating at least one measuring signal (p(P₁), p(P₂); M, p(P₂); P_{W}, p(P₂)) determined for the processing plant (1) by means of the control device (67), and
- activating the granulating device (6) depending on the at least one conveying position (P₁, P₂) determined,
**characterized**
in that a starting time T₀ for starting a predefined process for putting the granulating device (6) into operation is determined with the aid of the at least one measuring signal (p(P₁); M; P_{W}) by means of the control device (67), and
that a valve (44) of the granulating device (6) for feeding granulating water is activated proceeding from the starting time T₀ at a time interval ΔT_{W}.

2. Method according to claim 1, **characterized in that** a cutting mechanism (61) of the granulating device (6) is activated proceeding from the starting time T₀ at a time interval ΔT_{G}

3. Method according to claim 1 or 2, **characterized in that** an atomized spray is produced by means of a spray mechanism (62) of the granulating device (6).

4. Method according to claim 3, **characterized in that** the spray mechanism (62) is activated proceeding from the starting time T₀ at a time interval ΔT_{S}

5. Method according to any one of claims 1 to 4, **characterized in that** at least one of the time intervals ΔT_{W}, ΔT_{G} and ΔT_{S} is determined depending on at least one of the state variables, shaft speed and metering rate.

6. Method according to any one of claims 1 to 5, **characterized in that** the at least one measuring signal (M; P_{W}) characterizes a torque of the drive device (18) and, when a threshold value W_{M} is exceeded, the starting time T₀ is defined by means of the control device (67).

7. Method according to any one of claims 1 to 6, **characterized in that** the at least one measuring signal (p(P₁), p(P₂)) characterizes a pressure produced by the plastics material (2) at a specific conveying position (P₁, P₂).

8. Method according to claim 7, **characterized in that** when a threshold value Wₚ is exceeded, the starting time T₀ is defined by means of the control device (67).

9. Method according to claim 7 or 8, **characterized in that** when a threshold value Wp is exceeded, a time T₁ is determined by means of the control device (67) and at least one activation variable from the group, starting time T₀, time interval ΔT_{W}, time interval ΔT_{G} and the time interval ΔT_{S} is corrected with the aid of the time T₁ for a subsequent activation.

10. Processing plant for producing plastics material granulate having
- a screw machine (3),
- an electric drive device (18) for driving the screw machine (3),
- a metering device (24) for feeding a plastics material (2) to be processed into the screw machine (3),
- a granulating device (6) arranged downstream of the screw machine (3) in a conveying direction (5) of the plastics material (2),
- a control device (67), wherein the control device (67) is configured in such a way that
-- the screw machine (3) is driven by means of the drive device (18),
-- the metering device (24) is activated to feed plastics material (2) to be processed into the screw machine (3),
-- at least one conveying position (P₁, P₂) of the plastics material (2) in the screw machine (3) is determined by evaluating at least one measuring signal (p(P₁), p(P₂); M, p(P₂); P_{W}, p(P₂)) determined for the processing plant (1), and
-- the granulating device (6) is activated depending on the at least one determined conveying position (P₁, P₂),
**characterized**
in that the control device (67) is further configured in such a way that a starting time T₀ for starting a predefined process for putting the granulating device (6) into operation is determined with the aid of the at least one measuring signal (p(P₁); M; P_{W}) by means of the control device (67), and
that a valve (44) of the granulating device (6) for feeding granulating water is activated proceeding from the starting time T₀ at a time interval ΔT_{W}.

11. Processing plant according to claim 10, **characterized in that** the drive device (18) has at least one measuring mechanism (69; 68) to determine the at least one measuring signal (M; P_{W}), the at least one measuring signal (M; P_{W}) characterizing a torque of the drive device (18).

12. Processing plant according to claim 10 or 11, **characterized in that** at least one pressure measuring mechanism (71, 72) is provided to determine the at least one measuring signal (p(P₁), p(P₂)), the at least one measuring signal (p(P₁), p(P₂)) characterizing a pressure produced by the plastics material (2) at a specific conveying position (P₁, P₂).

13. Processing plant according to any one of claims 10 to 12, **characterized in that** the granulating device (6) has a spray mechanism (62) to produce an atomized spray.

## Revendications

1. Procédé de démarrage d'une installation de préparation pour la fabrication de granulés de matière synthétique, comprenant les étapes suivantes :
- mise au point d'une installation de préparation (1) avec
-- une machine à vis (3),
-- un dispositif d'entraînement (18) électrique pour la machine à vis (3),
-- un dispositif de dosage (24) pour l'alimentation en un matériau plastique synthétique (2) devant être traité dans la machine à vis (3),
-- un dispositif de granulation (6) disposé après la machine à vis (3) dans une direction de transport (5) du matériau plastique synthétique (2), et
-- un dispositif de commande (67),
- mise en marche de la machine à vis (3) au moyen du dispositif d'entraînement (18),
- apport du matériau plastique synthétique (2) devant être traité dans la machine à vis (3) au moyen du dispositif de dosage (24),
- détermination d'au moins une position de transport (P₁, P₂) du matériau plastique synthétique (2) dans la machine à vis (3) par l'évaluation d'au moins un signal de mesure (p(P₁), p(P₂); M, p(P₂); P_{W}, p(P₂)) déterminé pour l'installation de préparation (1) au moyen du dispositif de commande (67), et
- mise en marche du dispositif de granulation (6) en fonction d'au moins une position de transport (P₁, P₂) déterminée,
caractérisé en ce
qu'à l'aide d'au moins un signal de mesure (p(P₁) ; M ; P_{W}) une heure de départ T₀ pour le démarrage d'un processus de fonctionnement défini est déterminée pour le dispositif de granulation (6) au moyen du dispositif de commande (67), et
qu'en partant de l'heure de départ T₀, pendant un intervalle de temps ΔT_{W}, une vanne (44) du dispositif de granulation (6) est activée pour l'alimentation en eau de granulation.

2. Procédé selon la revendication 1, caractérisé en ce
qu'en partant de l'heure de départ T₀, un système de découpe (61) du dispositif de granulation (6) est démarré pendant un intervalle de temps ΔT_{G}.

3. Procédé selon les revendications 1 ou 2, caractérisé en ce
qu'un brouillard de pulvérisation est généré au moyen d'un système de pulvérisation (62) du dispositif de granulation (6).

4. Procédé selon la revendication 3, caractérisé en ce
que le système de pulvérisation (62) est démarré en partant de l'heure de départ T₀ pendant un intervalle de temps ΔT_{S}.

5. Procédé selon l'une des revendications 1 à 4, caractérisé en ce
qu'au moins l'un des intervalles de temps ΔT_{W}, ΔT_{G} et ΔT_{S} est déterminé en fonction d'au moins l'une des grandeurs d'état parmi la vitesse de rotation d'arbre moteur et les taux de dosages.

6. Procédé selon l'une des revendications 1 à 5, caractérisé en ce
qu'au moins un signal de mesure (M ; P_{W}) caractérise un couple du dispositif d'entraînement (18) et que, pour un dépassement d'une valeur limite W_{M}, l'heure de départ T₀ est définie au moyen du dispositif de commande (67).

7. Procédé selon l'une des revendications 1 à 6, caractérisé en ce
qu'au moins le signal de mesure (p(P₁), p(P₂) caractérise la pression générée par le matériau plastique synthétique (2) dans une position de transport (P₁, P₂) déterminée.

8. Procédé selon la revendication 7, caractérisé en ce
que, lors d'un dépassement d'une valeur limite W_{P}, l'heure de départ T₀ est définie au moyen du dispositif de commande (67).

9. Procédé selon les revendications 7 ou 8, caractérisé en ce
que, lors du dépassement d'une valeur limite W_{P}, un temps T₁ est déterminé au moyen du dispositif de commande (67) et qu'au moins une grandeur de démarrage, faisant partie du groupe constitué par l'heure de départ T₀, l'intervalle de temps ΔT_{W}, l'intervalle de temps ΔT_{G} et l'intervalle de temps ΔT_{S}, est corrigée pour un démarrage suivant en fonction du temps T₁.

10. Installation de préparation pour la fabrication de granulés en matière synthétique avec
- une machine à vis (3),
- un dispositif d'entraînement (18) électrique pour l'entraînement de la machine à vis (3),
- un dispositif de granulation (6) disposé après la machine à vis (3) dans une direction de transport (5) du matériau plastique synthétique (2),
- un dispositif de commande (67), le dispositif de commande (67) étant conçu de telle façon que
-- la machine à vis (3) est entraînée au moyen du dispositif d'entraînement (67),
-- le dispositif de dosage (24) pour l'alimentation du matériau plastique synthétique (2) dans la machine à vis (3) est démarré,
-- au moins une position de transport (P₁, P²) du matériau plastique synthétique (2) dans la machine à vis (3) est déterminée par l'évaluation d'au moins l'un des signaux de mesure (p(P₁), p(P₂) ; M, p(P₂) ; P_{W}, p(P₂) déterminés pour l'installation de préparation (1), et
-- le dispositif de granulation (6) est démarré en fonction de la au moins une position de transport (P₁, P₂) déterminée,
**caractérisée** en ce
que le dispositif de commande (67) est en outre conçu pour qu'une heure de départ T₀ pour le démarrage d'un processus de mise en oeuvre prédéfini pour le dispositif de granulation (6) est déterminée au moyen du dispositif de commande (67), et
qu'en partant de l'heure de départ T₀, une vanne (44) du dispositif de granulation (6) est démarrée pendant un intervalle de temps ΔT_{W} pour l'alimentation en eau de granulation.

11. Installation de préparation selon la revendication 10, **caractérisée** en ce
que le dispositif d'entraînement (18) pour la détermination d'au moins un signal de mesure (M ; P_{W}) présente au moins un système de mesure (69 ; 68), le au moins un signal de mesure (M ; P_{W}) caractérisant un moment de rotation du dispositif d'entraînement (18).

12. Installation de préparation selon les revendications 10 ou 11, **caractérisée** en ce
que, pour la détermination d'au moins un signal de mesure (p(P₁), p(P₂)), au moins un système de mesure de la pression (71, 72) est prévu, le au moins un signal de mesure (p(P₁), p(P₂)) caractérisant la pression générée par le matériau plastique synthétique (2) au niveau d'une position de transport (P₁, P₂) déterminée.

13. Installation de préparation selon l'une des revendications 10 à 12, **caractérisée** en ce
que le dispositif de granulation (6) présente un système de pulvérisation (62) pour la formation d'un brouillard de pulvérisation.
